# EUROPÄISCHE PATENTANMELDUNG

(11) **EP 1 103 775 A2**
(43) Veröffentlichungstag der Anmeldung: **30.05.2001**
(21) Anmeldenummer: 99204200.2
(22) Anmeldetag: 08.12.1999
(51) Int. Cl.: F28D 7/14, F28F 1/06

(54) **Wärmeaustauscher und Zapfwassererwärmungsanlage mit einem derartigen Wärmeaustauscher**

(30) Priorität: 23.11.1999 NL 1013648
(71) Anmelder: Heatex B.V., 9482 TW Tynaarlo (NL)
(72) Erfinder: Willemsen, Johannes Albertus Hendrikus, 9482 RZ Tynaarlo (NL)
(74) Vertreter: Ottevangers, Sietse Ulbe

(57) **Zusammenfassung**

Wärmeaustauscher zum Erwärmen von Zapfwasser mit einem Innenkanal (2; 152; 202; 252) und einem Außenkanal (4; 104; 154; 204; 254), die durch eine erste Wand (3; 153; 203; 253) getrennt sind. Eine Außenwand des Außenkanals ist profiliert. Hierdurch wird eine größere Wärmeübertragung auf die Umgebung erhalten und ist die Wärmeübertragung zwischen dem Innenkanal (2; 152; 202; 252) und dem Außenkanal (4; 104; 154; 204; 254) intensiver und kommt diese schneller in Gang. In einer Lage außerhalb eines Warmwasserspeichers (17) kühlt erwärmtes Zapfwasser sich im Wärmeaustauscher schneller ab, wodurch die Wassertemperatur sich nur kurz in einem Bereich befindet, in dem die Gefahr eines Zuwachses an Legionella-Bakterien besteht. In einer Lage in einem Warmwasserspeicher (7) wird Zapfwasser im Wärmeaustauscher (1) schnell erwärmt, wodurch die Anwesenheit einer kalten Zone unter der Temperatur, die zum Verhindern eines Zuwachses an Legionella-Bakterien erforderlich ist, verhindert wird. Auch sind Zapfwassererwärmungsanlagen mit einem derartigen Wärmeaustauscher beschrieben.

## Beschreibung

Die Erfindung bezieht sich auf einen Wärmeaustauscher nach dem Oberbegriff des Anspruchs 1 und auf eine Zapfwassererwärmungsanlage.

Beim Erwärmen von Zapfwasser ergibt sich das Problem, daß in Warmwasser mit einer Temperatur zwischen 25°C und 55°C nach längerer Zeit ein gesundheitsschädlicher Zuwachs an Legionella-Bakterien entstehen kann. Um einen derartigen Zuwachs zu verhindern, wird oft danach gestrebt, das gespeicherte Wasser auf einer hohen Temperatur zu halten, vorzugsweise höher als 60°C.

In verschiedenen Systemen ergibt sich jedoch das Problem, daß längere Zeit Wasser anwesend ist, das die angestrebte Temperatur nicht oder wenigstens nicht lange genug gehabt hat.

Aufgabe der Erfindung ist es, eine Lösung herbeizuführen, die es ermöglicht, in derartigen Systemen den Zuwachs an Legionella-Bakterien zu verhindern.

Diese Aufgabe wird nach der vorliegenden Erfindung dadurch erreicht, daß man einen Wärmeaustauscher gemäß Anspruch 1 ausführt. Die Erfindung kann sich zugleich in einer Zapfwassererwärmungsanlage nach Anspruch 11 oder 12 verkörpern, in der ein Wärmeaustauscher nach der Erfindung aufgenommen ist.

Durch die Anwendung einer profilierten Außenwand des Außenkanals wird bei einem gegebenen Temperaturunterschied eine größere Wärmeübertragung vom Außenkanal auf die Umgebung erhalten. Auch wird damit erreicht, daß die Wärmeübertragung zwischen dem Innenkanal und dem Außenkanal intensiver ist und schnell in Gang kommt.

Bei Anordnung des Wärmeaustauschers außerhalb eines Warmwasserspeichers wird so erreicht, daß Zapfwasser im Außenkanal, nachdem die Zufuhr von erwärmtem Wärmeübertragungsmedium eingestellt worden ist, schneller abkühlt. Hierdurch bleibt die Temperatur des Wassers nur kurze Zeit in einem Bereich, in dem der Zuwachs an Legionella-Bakterien möglich ist. Andererseits wird die Wassertemperatur des Zapfwassers bei erneuter Zufuhr von erwärmtem Wärmeübertragungsmedium verhältnismäßig schnell wieder erhöht.

Bei Anordnung des Wärmeaustauschers in einem Warmwasserspeicher kann Zapfwasser, das über den Innenkanal zuströmt, wirksam erwärmt werden, bevor es in den Warmwasserspeicher strömt, wenn als Reaktion auf das Zuführen von Zapfwasser über den Innenkanal erwärmtes Wärmeübertragungsmedium dem Außenkanal zugeführt wird. Die Aufwärmung des Zapfwassers ist dabei sehr wirksam durch die kurze Reaktionszeit des Wärmeaustauschers und die zugenommene Wärmeübertragung von Wärmeübertragungsmedium im Außenkanal auf Wasser im Innenkanal. Durch die wirksame Vorwärmung von zugeströmtem Zapfwasser wird verhindert, daß beim Zuführen von Zapfwasser zum Warmwasserspeicher unten im Warmwasserspeicher eine derart kalte Zone entsteht, daß die Temperatur darin lange unter der Temperatur von mindestens 60°C bleibt, die zum Verhindern eines Zuwachses an Legionella-Bakterien erforderlich ist.

Weiter nimmt durch die verstärkte Wärmeübertragung vom Außenkanal auf das Wasser im Speicher die Rücktemperatur des Wärmeübertragungsmediums ab. Dies kommt dem Wirkungsgrad der Erwärmung des Wärmeübertragungsmediums zugute und vergrößert dadurch die wirksame Wassererwärmungskraft der Anlage.

Besonders vorteilhafte Ausführungsformen der Erfindung sind in den abhängigen Ansprüchen beschrieben.

Im folgenden werden weitere Aufgaben, Ausführungsaspekte, Effekte und Details der Erfindung anhand von Ausführungsbeispielen beschrieben. Dabei wird auf die Zeichnung verwiesen, in der:
Fig. 1 eine Draufsicht eines Beispiels eines Wärmeaustauschers nach der Erfindung ist,
Fig. 2 eine Seitenansicht des Wärmeaustauschers nach Fig. 1 ist,
Fig. 3 eine Ansicht im Schnitt über die Linie III-III in Fig. 1 ist,
Fig. 4-7 Ansichten nach Fig. 3 von alternativen Ausführungsbeispielen sind,
Fig. 8 eine bis in den Schnitt über die Linie VIII-VIII in Fig. 1 durchbrochene Seitenansicht eines Endes des Wärmeaustauschers mit Anschlüssen für Zu- oder Abführleitungen ist,
Fig. 9 eine schematische Darstellung einer Zapfwassererwärmungsanlage nach der Erfindung ist, und
Fig. 10 eine schematische Darstellung einer weiteren Zapfwassererwärmungsanlage nach der Erfindung ist.

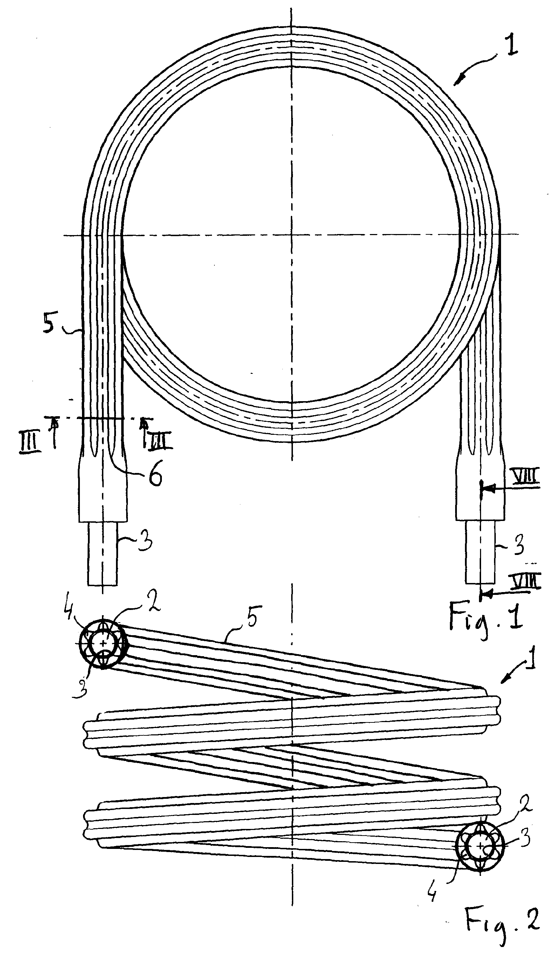

In Fig. 1-3 und 8 ist ein erstes Beispiel eines Wärmeaustauschers nach der Erfindung dargestellt.

Der Wärmeaustauscher 1 ist eingerichtet, um Zapfwasser zu erwärmen, das auch als Sanitärwasser, Leitungswasser oder Trinkwasser bezeichnet wird. Wärmeaustauscher zum Erwärmen von Zapfwasser sind, was ihren wasserleitenden Teil betrifft, oft aus Kupfer oder wenigstens Kupferlegierungen hergestellt, da diese gut wärmeleitend sind und, soweit bekannt, keine gesundheitsschädlichen Stoffe an das passierende Wasser abgeben. Auch andere Materialien können jedoch angewendet werden, wie Kunststoffe und andere Metalle, wie rostfreier Stahl und Aluminium, mit oder ohne Auskleidung des Zapfwasser leitenden Kanals.

Der Wärmeaustauscher 1 ist als ein längliches Element ausgeführt, versehen mit einem zentralen Innenkanal 2 mit einer durch eine erste Wand 3 gebildeten Außenbegrenzung und außerhalb des zentralen Kanals liegenden Außenkanälen 4, die sich in Längsrichtung des Innenkanals 2 erstrecken. Die Außenkanäle 4 haben eine Innenbegrenzung, die durch die erste Wand 3 gebildet wird, und eine durch eine zweite Wand 5 gebildete Außenbegrenzung. Nach diesem Beispiel ist der Wärmeaustauscher dabei als ein doppeltes, koaxiales Rohr ausgeführt, das schraubenförmig verläuft.

Aufeinanderfolgende Windungen des Wärmeaustauschers befinden sich in gegenseitigem Abstand voneinander. Dies ist der Wärmeabgabe an die Umgebung förderlich. Ein gegenseitiger Abstand der Windungen bis etwa zum Durchmesser der Außenwand des umlaufenden Doppelrohres des Wärmeaustauschers resultiert dabei in einer erheblichen Förderung des Wärmeaustausches bei einem verhältnismäßig gedrängten Bau.

Im Betrieb strömt, wenigstens während der Erwärmung von Zapfwasser im Wärmeaustauscher, ein Wärmeübertragungsfluidum durch den Innenkanal 2 oder die Außenkanäle 4 und das Zapfwasser durch den anderen der zwei Kanäle 2, 4. Das Zapfwasser im Kanal 4 oder 2 wird dann durch Wärmeaustausch mit dem Wärmeübertragungsfluidum im anderen Kanal 2 bzw. 4 erwärmt.

Fig. 9 zeigt ein Gebäude, versehen mit einer Zapfwassererwärmungsanlage mit einem Wärmeaustauscher 1, wie in Fig. 1-3 und 8 dargestellt. Zu dieser Zapfwassererwärmungsanlage gehören weiter ein Sonnenkollektor 10, Wärmeübertragungskanäle 11, 12, 13, 14 zum Zirkulieren eines Wärmeübertragungsmediums und Zapfwasserkanäle 15, 16 zum Zuführen und Abführen von Zapfwasser. Der Innenkanal 2 des Wärmeaustauschers 1 steht in Verbindung mit den Wärmeübertragungskanälen 13, 14 zum Zirkulieren eines Wärmeübertragungsmediums 18 in einem Wärmeabgabekreis, in dem auch ein Vorratsbehälter 17 zum Beibehalten eines Vorrats an Wärmeübertragungsmedium und eine Pumpe 19 aufgenommen sind. Die Außenkanäle 4 stehen mit den Zapfwasserkanälen 15, 16 in Verbindung. Der Sonnenkollektor 10, der Vorratsbehälter 17 und der Kanal 11 zwischen dem Sonnenkollektor 10 und dem Vorratsbehälter 17 bilden einen Kollektorkreis, in dem auch eine Pumpe 20 aufgenommen ist. Für nähere Ausführungsdetails über die Anlage zum Auffangen und Übertragen von Sonnenenergie auf das Zapfwasser wird auf die niederländische Patentanmeldung 1013261 verwiesen, deren Inhalt als hier eingefügt betrachtet wird.

Im Betrieb wird ein Wärmeübertragungsmedium - im allgemeinen in Form von Wasser mit etwaigen Zusatzstoffen - durch die Pumpe 20 im Kollektorkreis umgepumpt, wobei das Wärmeübertragungsmedium im Sonnenkollektor erwärmt und dann im Behälter 17 aufgefangen wird. Die Temperatur des Wassers 18 im Behälter 17 bleibt im allgemeinen unter 60°C. Als Reaktion auf die Abnahme von Wasser über den Zapfwasserabgabekanal 16 wird die Pumpe 19 gestartet, so daß erwärmtes Wärmeübertragungsmedium 18 aus dem Vorratsbehälter 17 zum Wärmeaustauscher 1 geführt wird. Durch Wärmeübertragung aus dem Wärmeübertragungsmedium im Innenkanal des Wärmeaustauschers wird dann das Zapfwasser in den Außenkanälen 4 des Wärmeaustauschers erwärmt. Wenn die Abnahme von erwärmtem Zapfwasser über den Zapfwasserabgabekanal 16 eingestellt wird, stoppt auch die Pumpe 19 und kühlt der Wärmeaustauscher 1 sich wieder auf Umgebungstemperatur ab. Dadurch, daß das zu verwendende Zapfwasser im Wärmeaustauscher 1 so nicht sehr lange auf einer erhöhten Temperatur gehalten wird, die einen Zuwachs an Legionella-Bakterien zuläßt, verringert sich das Risiko einer Infektion mit Legionella-Bakterien erheblich.

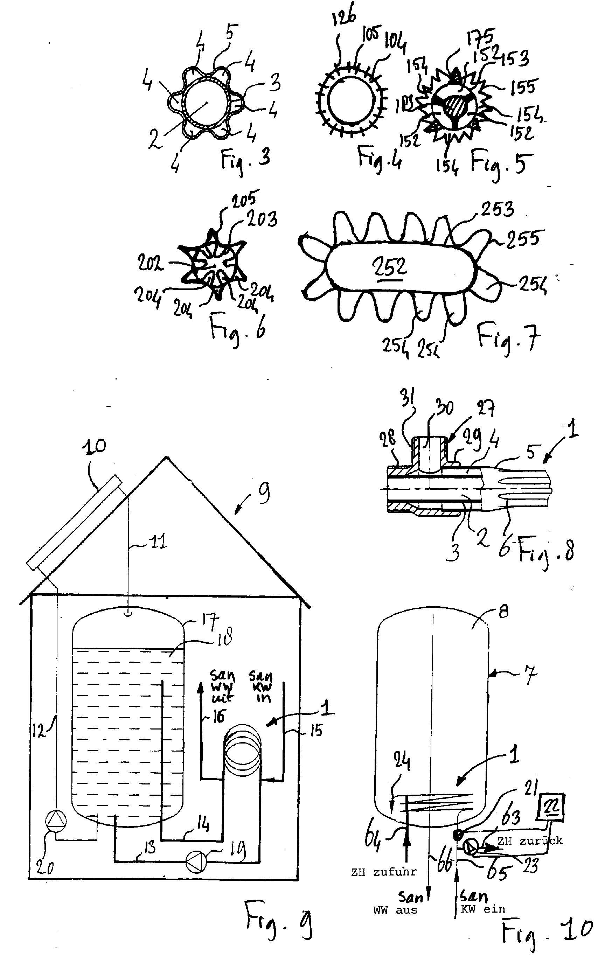

Fig. 10 zeigt eine Zapfwassererwärmungsanlage, deren Wärmeaustauscher 1 sich in einem Warmwasserspeicher 7 mit einem Speicherraum zum Speichern eines Zapfwasservorrats 8 befindet. Kanäle 63, 64 schließen sich an die Außenkanäle 4 des Wärmeaustauschers 1 zum Zu- und Abführen von Wärmeübertragungsmedium an, in diesem Beispiel Wasser aus einer externen Zentralheizungsanlage, das im folgenden als "ZH-Wasser" bezeichnet wird. Der Innenkanal 2 des Wärmeaustauschers 1 ist an eine Kaltwasserzuführleitung 65 zum Zuführen von kaltem oder wenigstens zu erwärmendem Zapfwasser angeschlossen und mündet am anderen Ende in den Speicherraum des Vorratsbehälters 7. In der Kaltwasserzuführleitung 65 ist ein Strömungsschalter 21 zum Registrieren einer Strömung durch die Kaltwasserzuführleitung 65 aufgenommen. Der Strömungsschalter 21 ist mit einer Steuereinheit 22 verbunden, die ihrerseits mit einer Pumpe 23 im Kreis zum Zirkulieren des ZH-Wassers zum Betätigen dieser Pumpe 23 verbunden ist. An den Vorratsbehälter 7 schließt sich weiter ein Zapfwasserabgabekanal 66 zum Abgeben von erwärmtem Zapfwasser 8 aus dem Behälter 7 an.

Im Betrieb wird beim Abzapfen von erwärmtem Zapfwasser 8 aus dem Vorratsbehälter 7 über den Zapfwasserabgabekanal 66 kaltes Zapfwasser über den Kaltwasserzuführkanal 65 zugeführt. Dies resultiert in einer Zustandsänderung des Strömungsschalters 21, was durch das mit diesem verbundene Steuersystem registriert wird. Als Reaktion darauf betätigt das Steuersystem 22 die Pumpe zum Starten der Zirkulation von ZH-Wasser. Bemerkt wird, daß das Starten der Zirkulation von ZH-Wasser auch als Reaktion auf das Detektieren anderer Erscheinungen erfolgen kann, die mit der Kaltwasserzufuhr verbunden sind, wie Temperaturrückgang bis unter ein bestimmtes Minimum oder Detektion einer Strömung im Abgabekanal. Die Pumpe und die Steuereinheit können zum Beispiel auch zu einem ZH-Kessel od. dgl. gehören, der zur Zusammenarbeit mit einer externen Zapfwassererwärmungsanlage eingerichtet ist. Das Zirkulieren von ZH-Wasser durch die Außenkanäle 4 erfolgt daneben auch als Reaktion auf die Registrierung einer Temperatur im Vorratsbehälter 7 unter einem bestimmten Minimum. Zur Wahrnehmung dieser Temperatur ist ein (nicht gezeigter) Sensor im Vorratsbehälter 7 anwesend, welcher Sensor ebenfalls mit der Steuereinheit 22 verbunden ist, um dieser ein die Temperatur repräsentierendes Signal zu geben.

Zapfwasser wird, bevor es über den Innenkanal 2 in den Vorratsbehälter 7 einströmt, durch Wärmeübertragung aus ZH-Wasser, das durch die Außenkanäle 4 strömt, erwärmt. Hierdurch ist die Zeit, daß in einem Bereich unten im Vorratsbehälter 7 die Temperatur unter der Solltemperatur (meistens über 60°C) liegt, beschränkt. Ein Zuwachs an Legionella-Bakterien wird so verhindert. Bemerkt wird, daß trotzdem beim Abzapfen ein vorübergehender Temperaturgradient im Zapfwasser 8 zugelassen wird. Dadurch wird gefördert, daß bei Abgabe größerer Warmwassermengen die Abzapftemperatur möglichst konstant gehalten wird.

Die Mündung 24 des Innenkanals 2 befindet sich in einem untenliegenden Teil des Speicherraumes. Hierdurch wird vermieden, daß das zwar vorgewärmte, aber doch noch verhältnismäßig kalte Zapfwasser, das in den Vorratsbehälter einströmt, vorzeitig den Einlaß des Abzapfkanals 66 erreichen kann. Zur weiteren Beschränkung der Bildung kalter Zonen kann gegebenenfalls vorgesehen sein, daß das einströmende Zapfwasser eine leichte rührende Wirkung hat.

Die zweite Wand 5 des Wärmeaustauschers 1 ist mit einer Profilierung 6 versehen, die sich über praktisch die ganze Länge der Kanäle 2, 4 erstreckt.

Dank der Profilierung der Außenwand 5 des Wärmeaustauschers 1 wird bei einem gegebenen Temperaturunterschied zwischen dem Wärmeaustauscher und der Umgebung eine stärkere Wärmeübertragung aus dem Wärmeaustauscher auf die Umgebung erhalten, als bei einem Wärmeaustauscher mit einem im wesentlichen glatten Mantel der Fall ist.

Bei Anordnung des Wärmeaustauschers in einer verhältnismäßig kühlen Umgebung (siehe Fig. 9) ist dies vorteilhaft, weil nach dem Stoppen der Abnahme von erwärmtem Wasser von dem Wärmeaustauscher das erwärmte Zapfwasser, das im Wärmeaustauscher 1 zurückgeblieben ist, sich schneller abkühlt und sich demzufolge während einer noch kürzeren Zeit in einem Temperaturbereich befindet, in dem ein Zuwachs an Legionella-Bakterien möglich ist. Dies gilt vor allem, wenn das Zapfwasser sich in den Außenkanälen 4 befindet.

Wenn der Wärmeaustauscher 1 in einem Warmwasserspeicher 7 angeordnet wird (siehe Fig. 10), ist der intensivere Wärmeaustausch mit der Umgebung vorteilhaft, weil dann eine bessere Wärmeübertragung aus dem Wärmeübertragungsmedium im Wärmeaustauscher 1 auf das Zapfwasser 8 im Warmwasserspeicher 7 erhalten wird. Das beschleunigte Erwärmen von Zapfwasser 8, das sich schon im Vorratsbehälter 7 befindet, ist vorteilhaft, um eine längere Anwesenheit von Temperaturzonen, in denen ein Zuwachs von Legionella-Bakterien möglich ist, zu verhindern.

Dank der Profilierung der Außenwand 5 des Wärmeaustauschers 1 wird auch erreicht, daß der Wärmeaustausch zwischen den Außenkanälen 4 und dem Innenkanal 2 schneller auf das Zuführen von erwärmtem Wärmeübertragungsmedium reagiert und daß die Wärmeübertragung zwischen dem Innenkanal und den Außenkanälen 4 intensiver ist. Dies wird durch das beschränktere Volumen und das reduzierte durchschnittliche Radialmaß der Außenkanäle 4 verursacht. Letzteres kann realisiert werden, ohne daß das maximale Radialmaß der Außenkanäle stark beschränkt wird. Dies würde die Außenkanäle nämlich empfindlich gegen Exzentrizität der ersten Wand relativ zur zweiten Wand machen, was wieder eine ungleichmäßig verteilte Strömung mit sich bringen würde.

In der in Fig. 10 dargestellten Anwendung ist die schnellere Reaktion und die intensivere Wärmeübertragung zwischen dem Innenkanal 2 und den Außenkanälen 4 vorteilhaft, weil dadurch das über den Innenkanal 2 zugeführte Zapfwasser schneller und auf eine höhere Temperatur erwärmt wird. Die höhere Temperatur des über die Mündung 24 im Innenraum des Vorratsbehälters ausströmenden Wassers ist vorteilhaft, um die Zeit, daß in untenliegenden Zonen des Vorratsbehälters 7 Temperaturen herrschen, bei denen ein Zuwachs an Legionella-Bakterien möglich ist, weiter zu beschränken.

Die Profilierung der zweiten Wand 4 erstreckt sich in Längsrichtung der Kanäle 2, 4. Dies ist vorteilhaft, um den Strömungswiderstand, den das Wasser in den Außenkanälen 4 erfährt, zu beschränken. Nach dem gezeigten Beispiel verläuft die Profilierung parallel zu den Kanälen 2, 4, wodurch die Profilierung sich einfach anbringen läßt, zum Beispiel durch Walzen oder Extrudieren. Es ist aber auch möglich, die sich in Längsrichtung der Kanäle 2, 4 erstreckende Profilierung in einem Winkel relativ zu den Kanälen verlaufen zu lassen, zum Beispiel dadurch, daß man sie schraubenförmig ausführt.

Beim Wärmeaustauscher 1 nach dem in Fig. 1-3 und 8 dargestellten Beispiel und bei den Beispielen von Wärmeaustauschern, deren Querschnitte in Fig. 5-7 dargestellt sind, stehen die erste Wand 3 bzw. 153, 203, 253 und die zweite Wand 5 bzw. 155, 205, 255 an in Umfangsrichtung verteilten Stellen in Verbindung miteinander. Das bietet den Vorteil, daß die Profilierung der zweiten Wand 5, 155, 205, 255 das Innenrohr zentriert zum Außenrohr hält. Die damit erhaltene Zentrierung gewährleistet, daß die Durchlaßoberfläche für die Strömung durch den Außenkanal 104 oder die Außenkanäle 4, 154, 204 gleichmäßig über deren Umfang verteilt wird.

Die Zentrierung des Innenrohres bleibt auch beim Biegen des länglichen Wärmeaustauschers in einer Rohrbiegemaschine sehr genau beibehalten, da das profiliert ausgeführte Außenrohr sich beim Biegen so setzt, daß es am Innenrohr anliegen bleibt. Die Zentrierung bleibt zum Beispiel besser erhalten als beim Biegen eines Wärmeaustauschers mit einem glatten Außenrohr und einem profilierten Innenrohr.

Bei den Ausführungsbeispielen nach Fig. 3, 6 und 7 liegen die erste Wand 3 bzw. 203, 253 und die zweite Wand 5 bzw. 205, 255 an in Umfangsrichtung verteilten Stellen außerdem aneinander an. Hierdurch wird die genannte Zentrierung erhalten, ohne daß es notwendig ist, Distanzhalter 175, wie nach dem in Fig. 5 gezeigten Beispiel, anzuwenden. Ein weiterer Vorteil des unmittelbaren Anliegens der ersten und der zweiten Wand aneinander ist, daß durch unmittelbare Wärmeleitung von der ersten Wand zur zweiten und umgekehrt die Wärmeübertragung zwischen dem ersten Kanal 2, 202, 252 und dem zweiten Kanal 4, 204, 254 sowie die Wärmeübertragung zwischen dem Wärmeaustauscher und der Umgebung weiter gefördert wird. Dies gilt insbesondere, wenn die Wände 3, 203, 253, 5, 205, 255 aus thermisch gut leitendem Material wie Metall hergestellt sind. Besonders geeignet sind zum Beispiel Kupfer und Aluminium und Legierungen davon, mit oder ohne Auskleidung.

Die Ausführungen nach Fig. 3, 5, 6 und 7 sind weiter mit mehreren über den Umfang der ersten Wand 3, 153, 203, 253 verteilten Außenkanälen 4, 154, 204, 254 versehen. Die Außenkanäle haben dadurch je einzeln einen verhältnismäßig kleinen Querschnitt. Das bietet den Vorteil, daß verhindert wird, daß Ablagerungen und Bereiche mit verminderter Durchströmung entstehen. Sobald sich in einem Bereich eine Ablagerung bildet, nimmt der Druckabfall über diesen Bereich zu, wodurch die erodierende Wirkung des Wassers auf die Ablagerung zunimmt und diese in vielen Fällen mitgenommen werden wird.

Bei den Wärmeaustauschern nach Fig. 3, 5, 6 und 7 hat die zweite Wand 5, 155, 205, 255 eine im wesentlichen einheitliche Wanddicke. Das bietet den Vorteil, daß die zweite Wand durch Walzen aus einem vorgefertigten Rohrmaterial hergestellt werden kann. Die zweite Wand 105 des in Fig. 4 dargestellten Ausführungsbeispiels eignet sich vor allem zur Herstellung durch Extrusion. Die Rippen 126 sind dann im Prinzip durchgehend. Es ist auch möglich, statt durchgehende Rippen einzelne Schaufeln anzubringen. Diese können zum Beispiel in Schlitzen, die in die zweite Wand gefräst oder gestanzt sind, montiert werden. Durch Anwendung einzelner Schaufeln entsteht die Möglichkeit, das Fluidum im Außenkanal 104 besonders intensiv zu mischen, was der Wärmeübertragung förderlich ist.

Profilierungen, die sich besonders zur Herstellung durch Walzen eignen, sind diejenigen, bei denen in Umfangsrichtung aufeinanderfolgende Teile der zweiten Wand 5, 155, 205, 255 sich in einem in Umfangsrichtung alternierend zunehmenden und abnehmenden Abstand von der ersten Wand 3, 153, 203, 253 befinden. Besonders günstig ist dabei ein Wellenprofil, zum Beispiel, wie in Fig. 3 und 7 dargestellt, weil dabei die maximale lokale Verformung des Materials verhältnismäßig beschränkt bleibt.

Der Wärmeaustauscher nach dem in Fig. 5 dargestellten Ausführungsbeispiel ist weiter mit einem Kern 183 versehen, der sich über drei in Umfangsrichtung der ersten Wand 153 verteilte Linien gegen diese erste Wand 153 stützt. Zwischen diesem Kern und der ersten Wand befinden sich drei Innenkanäle 152. Der Kern 183 beschränkt das Volumen des Fluidums in der Mitte des Innenrohres, was weiter einer schnellen Aufwärmung und Abkühlung des Wärmeaustauschers förderlich ist, vor allem wenn der Kern 183 aus einem Material mit einer geringen thermischen Kapazität, wie Kunststoff, hergestellt ist.

Bei dem in Fig. 6 dargestellten Wärmeaustauscher ist auch die zweite Wand 203 profiliert ausgeführt. Das ist vorteilhaft zur Förderung der Wärmeübertragung zwischen dem Innenkanal 202 und den Außenkanälen 204 und damit auch der Wärmeübertragung zwischen dem Innenkanal 202 und der Umgebung des Wärmeaustauschers.

Die erste Wand 253 des Wärmeaustauschers nach Fig. 7 hat eine abgeflachte Form. Auch das bietet den Vorteil, daß der Innenkanal 252 bei einem gegebenen Umfangsmaß der ersten Wand 253 eine reduzierte Durchströmoberfläche hat, wodurch ein besserer Wärmeaustausch zwischen dem Innenkanal 252 und den Außenkanälen 254 sowie mit der Umgebung ermöglicht wird.

In Fig. 8 ist ein Anschlußbereich des Wärmeaustauschers nach Fig. 1-3 dargestellt. Im Anschlußbereich hat die zweite Wand 5 eine in Umfangsrichtung im wesentlichen glatte Form. Das ist vorteilhaft zum Befestigen eines Kupplungsstückes 27 am Wärmeaustauscher 1. Das vorgeschlagene Kupplungsstück hat zwei Manschetten 28, 29, die in Axialrichtung des Wärmeaustauschers 1 gegeneinander versetzt sind. Die zweite Wand 5 ist dabei weiter gekürzt als die erste Wand 3 und ist mit der im Innendurchmesser breiteren der zwei Manschetten 28, 29 verbunden. Die erste Wand ist mit der im Innendurchmesser engeren der zwei Manschetten 28, 29 verbunden.

Die Außenkanäle 4 stehen über die breitere Manschette 29 in Verbindung mit einem Durchlaß 30 durch eine dritte Manschette 31, die quer zum Teil des Wärmeaustauschers 1 an der Stelle des Kupplungsstückes 27 gerichtet ist. Daran ist die Leitung anzuschließen, die bestimmt ist, um mit den Außenkanälen 4 verbunden zu werden. An die Manschette 28 in der Verlängerung des Wärmeaustauschers 1 ist die Leitung anzuschließen, die mit dem Innenkanal 2 verbunden werden soll.

Der Wärmeaustauscher 1 hat einen Übergangsbereich, in dem die zweite Wand 4 allmählich von einer im wesentlichen glatten Form in die profilierte Form übergeht. Der Übergang in den profilierten Teil des Wärmeaustauschers 1 verursacht dadurch wenig Strömungswiderstand.

Es wird dem Fachmann klar sein, daß die Erfindung nicht auf die vorbeschriebenen Ausführungsbeispiele beschränkt ist, sondern daß im Rahmen der Erfindung viele andere Varianten und Ausführungsformen möglich sind. So kann zum Beispiel das Doppelrohr des Wärmeaustauschers zu einer anderen Form als eine Schraubenlinie gewickelt sein, wie zu einer Spirale in einer oder mehreren Ebenen hin und her gebogene und mehreckig verlaufende Wärmeaustauscher gehören zu den Möglichkeiten. Auch die Form des Wärmeaustauschers im Querschnitt und die Ausführung des Anschlusses kann in vielen anderen Weisen ausgeführt werden.

## Patentansprüche

1. Wärmeaustauscher zum Erwärmen von Zapfwasser, versehen mit einem zentralen Innenkanal (2; 152; 202; 252), mindestens einem Außenkanal (4; 104; 154; 204; 254), der sich in Längsrichtung des genannten Innenkanals (2; 152; 202; 252) außerhalb des genannten Innenkanals (2; 152; 202; 252) erstreckt, einer ersten Wand (3; 153; 203; 253) zwischen dem genannten Innenkanal (2; 152; 202; 252) und dem genannten mindestens einen Außenkanal (4; 104; 154; 204; 254) und einer zweiten Wand (5; 105; 155; 205; 255), die eine Außenbegrenzung des genannten mindestens einen Außenkanals (4; 104; 154; 204; 254) bildet, **dadurch gekennzeichnet**, daß die genannte zweite Wand (5; 105; 155; 205; 255) profiliert ausgeführt ist.

2. Wärmeaustauscher nach Anspruch 1, wobei die genannte Profilierung (6) sich in Längsrichtung der genannten Kanäle (2, 4; 104; 152, 154; 202, 204; 252, 254) erstreckt.

3. Wärmeaustauscher nach Anspruch 1 oder 2, wobei die genannte erste Wand (3; 153; 203; 253) und die genannte zweite Wand (5; 155; 205; 255) an in Umfangsrichtung verteilten Stellen in Verbindung miteinander stehen.

4. Wärmeaustauscher nach Anspruch 3, wobei die genannte erste Wand (3; 203; 253) und die genannte zweite Wand (5; 105; 205; 255) an in Umfangsrichtung verteilten Stellen aneinander anliegen.

5. Wärmeaustauscher nach Anspruch 2 oder 3, wobei mehrere der genannten Außenkanäle (4; 154; 204; 254) über den Umfang der ersten Wand (3; 153; 203; 253) verteilt sind.

6. Wärmeaustauscher nach einem der vorhergehenden Ansprüche, wobei die genannte zweite Wand (5; 105; 155; 205; 255) eine im wesentlichen einheitliche Wanddicke hat.

7. Wärmeaustauscher nach Anspruch 5, wobei in Umfangsrichtung aufeinanderfolgende Teile der zweiten Wand (5; 155; 205; 255) sich in einem in Umfangsrichtung alternierend zunehmenden und abnehmenden Abstand von der genannten ersten Wand (3; 153; 203; 253) befinden.

8. Wärmeaustauscher nach Anspruch 5 oder 6, wobei die genannte Profilierung (6) als ein Wellenprofil ausgeführt ist.

9. Wärmeaustauscher nach einem der vorhergehenden Ansprüche, weiter versehen mit einem Anschlußbereich, in dem die genannte zweite Wand (5) in einer Umfangsrichtung eine im wesentlichen glatte Form hat, und einem Übergangsbereich, in dem die genannte zweite Wand (5) allmählich von der genannten, im wesentlichen glatten Form in die genannte profilierte Form übergeht.

10. Wärmeaustauscher nach einem der vorhergehenden Ansprüche, der eine Anzahl aufeinanderfolgender Wicklungen in gegenseitigem Abstand voneinander bildet.

11. Zapfwassererwärmungsanlage mit einem Wärmeaustauscher (1) nach einem der vorhergehenden Ansprüche, weiter versehen mit einem Sonnenkollektor (10), Wärmeübertragungskanälen (11-14) zum Zirkulieren eines Wärmeübertragungsmediums und Zapfwasserkanälen (15, 16) zum Zuführen und Abführen von Zapfwasser, wobei der genannte Innenkanal (2) mit den genannten Wärmeübertragungskanälen (11-14) zum Zirkulieren eines Wärmeübertragungsmediums in Verbindung steht, und wobei der genannte mindestens eine Außenkanal (4) mit den genannten Zapfwasserkanälen (15, 16) in Verbindung steht.

12. Zapfwassererwärmungsanlage mit einem Wärmeaustauscher (1) nach einem der Ansprüche 1-10, weiter versehen mit einem Warmwasserspeicher (7) mit einem Speicherraum zum Speichern eines Zapfwasservorrats (8) und Kanälen (64, 65) zum Zu- und Abführen eines Wärmeübertragungsmediums, wobei der Wärmeaustauscher (1) sich im genannten Innenraum befindet, wobei der genannte mindestens eine Außenkanal (4) mit den genannten Kanälen (64, 65) zum Zu- und Abführen eines Wärmeübertragungsmediums in Verbindung steht, und wobei der Innenkanal (2) in den genannten Speicherraum mündet.

13. Zapfwassererwärmungsanlage nach Anspruch 12, wobei eine Mündung (24) des genannten Innenkanals (2) sich in einem untenliegenden Teil des genannten Speicherraumes befindet.
